Europäisches Patentamt

European Patent Office

Office européen des brevets

(19)

(11) Veröffentlichungsnummer: **0 119 291**
**B1**

(12) # EUROPÄISCHE PATENTSCHRIFT

(45) Veröffentlichungstag der Patentschrift:
**16.12.87**

(51) Int. Cl.⁴: **F 16 C  33/20**

(21) Anmeldenummer: **83102831.1**

(22) Anmeldetag: **22.03.83**

(54) **Verfahren zum Herstellen von Gleitflächen von Maschinenteilen.**

(43) Veröffentlichungstag der Anmeldung:
**26.09.84 Patentblatt 84/39**

(45) Bekanntmachung des Hinweises auf die Patenterteilung:
**16.12.87 Patentblatt 87/51**

(84) Benannte Vertragsstaaten:
**CH DE FR GB IT LI**

(56) Entgegenhaltungen:
**DD-A-109 057**
**DD-A-122 576**
**DE-A-2 100 365**
**US-A-3 431 160**

(73) Patentinhaber: **MAHO Aktiengesellschaft, Postfach 1280, D-8962 Pfronten (DE)**

(72) Erfinder: **Schneider, Peter, Bachweg 12, D-8962 Pfronten- Steinach (DE)**

(74) Vertreter: **Patentanwälte Beetz sen. - Beetz jun. Timpe - Siegfried - Schmitt- Fumian, Steinsdorfstrasse 10, D-8000 München 22 (DE)**

EP 0 119 291 B1

LIBER, STOCKHOLM 1987

## Beschreibung

Die Erfindung betrifft ein Verfahren zum Herstellen von mit Schmiernuten versehenen Gleitflächen von aneinander geführten Maschinenteilen der im Oberbegriff des Patentanspruchs angegebenen Gattung.

In verschiedensten technischen Gebieten, insbesondere im Werkzeugmaschinenbau, besteht das Problem der möglichst reibungsarmen genauen und annähernd spielfreien Führung von relativ gegeneinander bewegbaren Maschinenteilen. Insbesondere bei NC-Werkzeugmaschinen müssen beispielsweise die Tische und ihre Einzelteile sowie die Spindelstöcke an den Ständern sehr genau, leichtgängig und ohne Slipstick geführt werden, um die gesteuerten Bearbeitungs-Bewegungen zwischen dem Werkzeug und dem Werkstück mit der geforderten Präzision ausführen zu können. In neuerer Zeit werden lineare Gleitführungen eingesetzt, bei denen nur noch die Gleitflächen eines Maschinenteils feinbearbeitet sind und die benachbarten Gleitflächen des anderen Maschinenteils aus einem aushärtendem Gleitmittel bestehen. Hergestellt werden derartige Gleitführungen durch Zusammenfügen beider Maschinenteile unter Ausbildung eines abgedichteten entlüfteten Spaltraumes, in den anschließend das aushärtende Gleitmittel unter Druck eingespritzt wird. Dieser Typ von Gleitführungen hat den Vorteil einer hohen Führungsgenauigkeit, weil die Gleit- bzw. Führungsflächen der beiden Maschinenteile nicht mehr gesondert und für sich gefertigt werden müssen, sondern durch einen Formvorgang der zusammengefügten Bauteile entstehen. Da die Feinbearbeitung der Gleitflächen des zweiten Maschinenteils eingespart werden kann, vereinfacht sich darüber hinaus auch die Herstellung. Relativ aufwendig war jedoch auch bei diesem Gleitführungstyp die Herstellung der Schmiernuten in den Gleitflächen des einen oder anderen Maschinenteils, die spanend auf besonderen NC-Maschinen entweder aus der feinbearbeiteten Metall-Gleitfläche oder aus der Gleitmittel-Gleitfläche des anderen Maschinenteils herausgearbeitet werden müssen. Diese Herstellungsweise ist zeit- und kostenaufwendig und blockiert in der Serienfertigung eine oder mehrere Werkzeugmaschinen für andere Bearbeitungsvorgänge. Darüber hinaus ergaben sich Auskehlungen durch Lufteinschlüsse im Gleitmittel, die aufwendig von Hand aufgefüllt werden müßten.

Aus der DD-A-109 057 ist ein Verfahren zur Herstellung von Gleitführungen aus Kunststoffen bekannt, bei dem auf der Grundfläche der späteren Führungsbahn im Abstand der Dicke der fertigen Gleitmittelschicht ein gesonderter Formkörper befestigt wird, der eine sog. Meisterfläche aufweist. Der zwischen dieser Meisterfläche und der Grundfläche gebildete Hohlraum wird allseitig abgedichtet und anschließend durch Vergießen mit dem flüssigen Kunststoff gefüllt. Nach dem Aushärten des Kunststoffs werden die Dichtungsmittel und der Formkörper entfernt. Die Meisterfläche des Formkörpers enthält dauerhaft oder lösbar befestigte Erhebungen, die in der Kunststoffschicht Schmiernuten und Schmiertaschen erzeugen. Diese Methode ist jedoch mit einer Reihe von gravierenden Nachteilen behaftet. Durch die Ausformung der Gleitmittelfläche an der Meisterfläche eines gesonderten Formkörpers - und nicht an der Führungsfläche des anderen Maschinenteils - kann eine genaue Passung des Gleitflächen-Paares nicht gewährleistet werden, so daß zumindest eine Fläche nachgearbeitet werden muß, um die im µ-Bereich liegenden Toleranzgrenzen einzuhalten. Wenn an der Meisterfläche die Schmiernutenkerne bildenden Erhebungen lösbar z. B. durch Magnetkräfte befestigt werden sollen, setzt dies einen ferromagnetischen Werkstoff voraus. Der Herstellungsaufwand solcher Metallkerne wäre erheblich, so daß unter wirtschaftlichen Gesichtspunkten nur ihre möglichst häufige Wiederverwendung infrage kommt. Die ist jedoch praktisch nicht möglich, weil sich die schmalen Metallkerne beim Einpressen des Kunststoffes verformen bzw. beim Entformen verbiegen und dann nicht mehr mit durchgehend dichter Auflage auf die Meisterfläche aufgebracht werden können. Schließlich ergeben sich durch die Abdichtung des Hohlraumes beim Einfüllen des Kunststoffs Auskehlungen durch Lufteinschlüsse insbesondere in unmittelbarer Nähe der Schmiernutenkerne, die den späteren Ölfluß behindern oder mühsam von Hand aufgefüllt und geglättet werden müssen.

Aufgabe der Erfindung ist es, die Herstellung von Schmiernuten in den Gleitflächen zweier aneinander geführter Maschinenteile zu vereinfachen, ohne die Führungsgenauigkeit dadurch zu beeinträchtigen.

Diese Aufgabe wird erfindungsgemäß durch die kennzeichnenden Merkmale des Patentanspruchs gelöst.

Die Ausbildung der durchgehenden Längsnut als Spaltraum verhindert die Entstehung von Lufteinschlüssen, weil das z. B. zentral unter Druck eingefüllte pastöse Gleitmittel sich in Richtung der Längsnut ausbreiten kann und nach vollständigem Ausfüllen des Spaltraums an dessen offenen Stirnseiten herausquillt. Da die beiden Maschinenteile für den Füllvorgang unmittelbar zusammengefügt sind, entfallen jegliche Richtarbeiten zum Erhalt eines bestimmten Zwischenabstands bei gleichzeitig verbesserter Genauigkeit. Die neuen Schmiernutengitter aus Kunststoff, z. B. aus einem Polyurethan-Werkstoff, lassen sich auch mit komplizierten Gittermustern als billige Massenartikel herstellen und können daher nach einmaliger Verwendung weggeworfen werden. Das Aufkleben gewährleistet eine ausreichend feste Haftung der Schmiernutengitter während des Einfüll- und Ausformvorganges ohne unerwünschte Verformungen von Gitterteilen.

Das erfindungsgemäße Verfahren ist gegenüber dem spanenden Herausarbeiten des Schmiernuten-Reliefs technisch außerordentlich einfach durchzuführen und verlangt keine besonderen Maschinen oder Hilfsgeräte. Die Herstellungskosten für die Schmiernuten können gegenüber dem bekannten Vorgehen um ca. 50 % gesenkt werden und es ergeben sich als weitere Vorteile eine höhere Flexibilität im Fertigungsfluß, organisatorische Vereinfachungen sowie Einsparungen von Lagerzeiten und Investitionen für die NCgesteuerte Werkzeugmaschine.

Im folgenden wird die Erfindung anhand der Zeichnung im einzelnen beschrieben. Es zeigen:

Fig. 1 schematisch eine Draufsicht auf eine feinbearbeitete Metall-Gleitfläche mit aufgeklebtem

0 119 291

Schmiernutgitter;

Fig. 2 vier verschiedene Zustände bei der Herstellung der Schmiernuten gemäß der Erfindung.

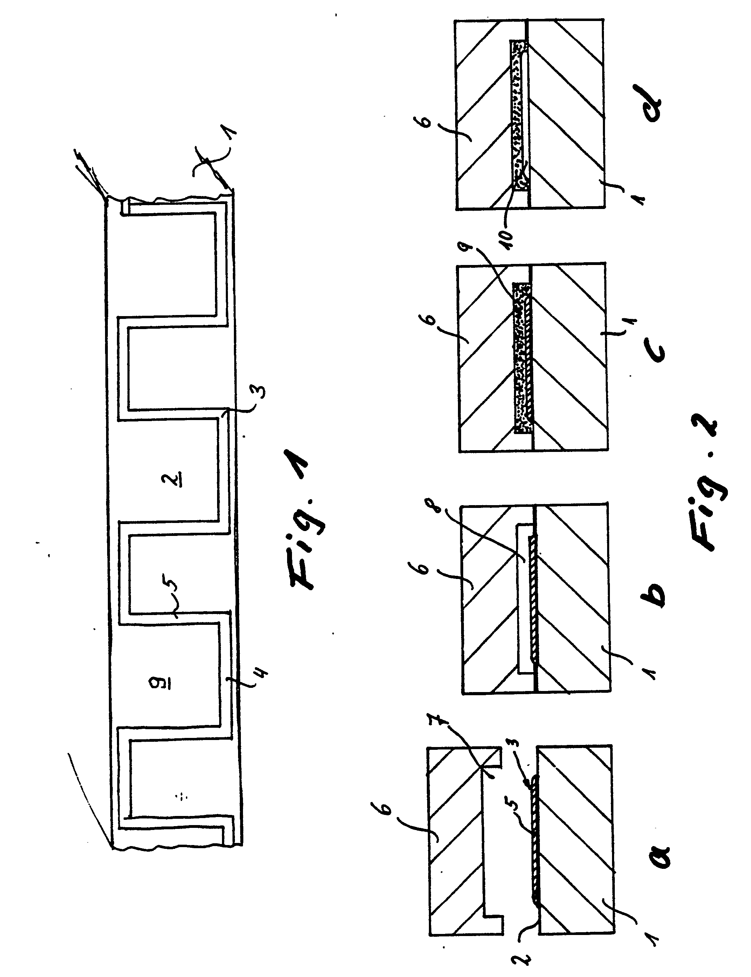

Gemäß Fig. 1 weist ein ortsfestes erstes Maschinenteil 1 eine feinbearbeitete Gleitfläche 2 auf, die beispielsweise eine Fläche einer Schwalbenschwanz-Führung sein kann. Auf diese Gleitfläche 2 ist ein Schmiernutengitter 3 z. B. mittels eines Zyanoacrylate-Klebemittels aufgeklebt, das aus miteinander einstückig verbundenen Längs- und Querstegen 4, 5 von der Breite und Höhe der gewünschten Schmiernuten besteht. Je nach dem gewünschten Anwendungsfall können die Schmiernutengitter 3 in unterschiedlicher Weise ausgebildet sein.

Nach dem in Fig. 2a dargestellten Aufkleben des Schmiernutengitters 3 auf die Gleitfläche 2 des ersten ortsfesten Maschinenteils 1 werden die Gleitfläche 2 sowie die freien Oberflächen des Schmiernutengitters 3 mit einem geeigneten Trennmittel beschichtet, z. B. besprüht. Daraufhin wird das zweite Maschinenteil 6, das in seinem Gleitflächenbereich eine breite, flache Längsausnehmung bzw. Längsnut 7 aufweist, mit dem ersten Bauteil 1 der in Fig. 2b dargestellten Weise geometrisch genau zusammengefügt und in dieser Position fixiert. Dabei bildet die breite Längsnut 7 einen geschlossenen Spaltraum 8, in den sich das Schmiernutengitter 3 erstreckt. In diesen abgeschlossenen Spaltraum 8 wird ein geeignetes hochviskoses Gleitmittel 9 unter Druck eingebracht, das - wie in Fig. 2c dargestellt - den Spaltraum 8 vollständig ausfüllt. Dieses Gleitmittel härtet nach dem Einspritzen in den Spaltraum praktisch ohne Schrumpfung aus. Nach dem Aushärten werden die beiden Maschinenteile 1, 6 voneinander wegbewegt, woraufhin das Schmiernutengitter 3 von der Gleitfläche 2 des ersten Maschinenteils beispielsweise von Hand einfach abgezogen werden kann. Dieses Schmiernutengitter 3 hat im Oberflächenbereich der Gleitmittelschicht 9 eine entsprechende Negativ-Spur hinterlassen, die die zusammenhängende Schmiernut 10 im Maschinenteil 6 ergibt.

Das erfindungsgemäße Verfahren kann auch zum Herstellen von Schmiernuten an beliebig geformten Gleitlagerflächen in entsprechender Weise angewandt werden. Zur Herstellung von Schmiernuten in zylindrischen Lagerkörpern ist es lediglich notwendig, die Form des Schmiernutengitters an die zylindrische Form anzupassen, d. h. das Schmiernutengitter zylindrisch aus Kunststoff zu formen, so daß es sich beispielsweise auf den Außenumfang einer den ersten Maschinenteil bildenden Welle aufschieben läßt. Die entsprechende Lagerbuchse kann mit Übermaß hergestellt werden und der durch dieses Übermaß sich ergebende Spaltraum kann anschließend mit dem Gleitmittel gefüllt werden. Ein entsprechendes Vorgehen ist auch bei kugelförmigen Maschinenelementen, z. B. bei Kugelgelenken möglich.

**Patentansprüche**

Verfahren zum Herstellen von mit Schmiernuten (10) versehenen Gleitflächen von aneinander geführten Maschinenteilen (1,6),
bei dem die Metall-Gleitfläche des einen Maschinenteils (1) mit einem Trennmittel beschichtet wird,
bei dem beide Maschinenteile (1,6) unter Ausbildung eines durchgehenden Spaltraums (8) im Bereich ihrer Gleitflächen zusammengefügt werden und
bei dem anschließend der Spaltraum (8) mit einem unter Druck eingespritzten aushärtenden Gleitmittel (9) vollständig ausgefüllt wird,
dadurch gekennzeichnet,
daß im Gleitflächenbereich des zweiten Maschinenteils (6) vor dem Zusammenfügen der beiden Maschinenteile (1, 6) eine breite flache Längsnut (7) eingearbeitet wird, die nach dem Zusammenfügen der beiden Maschinenteile (1, 6) den mit Gleitmittel (9) zu füllenden Spaltraum (8) bildet und
daß auf die feinbearbeitete Gleitfläche (2) des ersten Maschinenteils (1) vor dem Zusammenfügen ein aus einem Kunststoff durchgehend geformtes Schmiernutengitter (3) aufgeklebt wird, welches sich in den Spaltraum (8) der zusammengefügten beiden Maschinenteile (1, 6) erstreckt und das nach dem Aushärten des Gleitmittels unter Ausformung einer negativen Schmiernute (10) in der Gleitmittelschicht wieder entfernt wird.

**Claim**

A method of making sliding surfaces of machine parts (1, 6) guided along each other, said sliding surfaces being provided with oil grooves (10),
in which the metallic sliding surface of the one machine part (1) is coated with a separating agent,
both machine parts (1, 6) are joined in the vicinity of their sliding surfaces while forming a continuous gap (8), and
subsequently the gap (8) is completely filled with a curable slipping agent (9) injected under pressure,
characterised in
that prior to joining of the two machine parts (1, 6) a wide flat longitudinal groove (7) is formed in the sliding surface area of the second machine part (6), said groove subsequent to the joining of the two machine parts (1, 6) constituting the gap (8) which is to be filled with said slipping agent (9), and
that prior to joining, an oil groove grid (3) continuously formed from plastic material is glued onto the fine-

3

machined sliding surface (2) of the first machine part (1), said grid extending into the gap (8) of the two joined machine parts (1, 6) and after curing of the slipping agent being removed to thereby form a negative oil groove (10) in said slipping agent layer.

**Revendication**

Procédé de fabrication de surfaces de glissement munies de rainures de graissage (10) à partir de piéces de machine (1,6) placées l'une contre l'autre

dans lequel on revêt la surface métallique de glissement de l'une des piéces de machine (1) avec un agent de séparation,

dans lequel on réunit les deux piéces de machine (1, 6) en réalisant un espace formant jeu (8), continu, dans la zone de leurs surfaces de glissement et

dans lequel ensuite on remplit complétement l'espace formant jeu (8) avec un agent de glissement (9) injecté sous pression et qui doit faire prise,

caractérisé

en ce que, dans la zone des surfaces de glissement de la seconde piéce de machine (6), avant de réunir les deux piéces de machine (1,6), on usine les rainures longitudinales larges et plates (7) qui, après la réunion des deux piéces de machine (1,6) constitue l'espace formant jeu (8) qu'il faut remplir avec l'agent de glissement (9); et en ce que, sur la surface de glissement (2) finement usinée de la première piéce de machine (1), avant la réunion, on colle un treillis (3), pour rainures de graissage, formé sans interruption en plastique, qui s'étend dans l'espace formant jeu (8) des deux piéces de machine (1,6) réunies et qu'après la prise de l'agent de glissement, on enlève à nouveau avec formation d'une rainure de graissage négative (10) dans la couche d'agent de glissement.

Fig. 1

a          b          c          d

Fig. 2

0 119 291